# EUROPEAN PATENT APPLICATION

(11) **EP 3 730 525 A1**
(43) Date of publication of application: **28.10.2020**
(21) Application number: 18891699.3
(22) Date of filing: 14.12.2018
(51) Int. Cl.: C08F 290/04, C09K 3/10, H01M 8/0273, H01M 8/0284, H01M 8/0286, H01M 8/10

(54) **CURABLE RESIN COMPOSITION, AND FUEL CELL AND SEALING METHOD USING SAME**

(30) Priority: 18.12.2017 JP 2017241977
(71) Applicant: ThreeBond Co., Ltd., Tokyo 192-0398 (JP)
(72) Inventor: SOGA, Tetsunori, Hachioji-shi, Tokyo 192-0398 (JP)
(74) Representative: Winter, Brandl, Fürniss, Hübner, Röss, Kaiser, Polte - Partnerschaft mbB
(86) International application number: PCT/JP2018/046113
(87) International publication number: WO 2019/124252

(57) **Abstract**

The present invention aims to provide a curable resin composition from which a cured product having high tensile strength and high extensibility can be obtained. A resin composition comprises the following ingredients (A) to (C): ingredient (A): a polymer which has one or more (meth)acryloyl groups and has a polyisobutylene skeleton containing a -[CH₂C(CH₃)₂]- unit; ingredient (B): a radical polymerization initiator; and ingredient (C): a monomer (c1) which has an alicyclic structure containing a (meth)acryloyl group and a substituent of a hydrocarbon group having 2 to 20 carbon atoms or a monomer (c2) which has a (meth)acryloyl group and a dicyclopentenyl group or adamantyl group.

## Description

### Technical Field

The present invention relates to a curable resin composition.

### Background Art

In recent years, fuel cells have drawn attention as new energy systems for automobiles and households. A fuel cell is a power generator that extracts electricity by chemically reacting hydrogen and oxygen. In addition, the fuel cell is a clean power generator of the next generation because the fuel cell achieves a high energy efficiency in power generation, and generates only water from the reaction of the hydrogen and the oxygen. There are four types of fuel cells, i.e., a solid polymer fuel cell, a phosphoric acid fuel cell, a molten carbonate fuel cell, and a solid oxide fuel cell. Among them, the solid polymer fuel cell achieves a high power generation efficiency even though its operating temperature is relatively low temperature (around 80°C), and therefore is expected for usages such as power sources for automobiles, power generators for households, small power sources for electronic equipment such as mobile phones, and power sources for emergency.

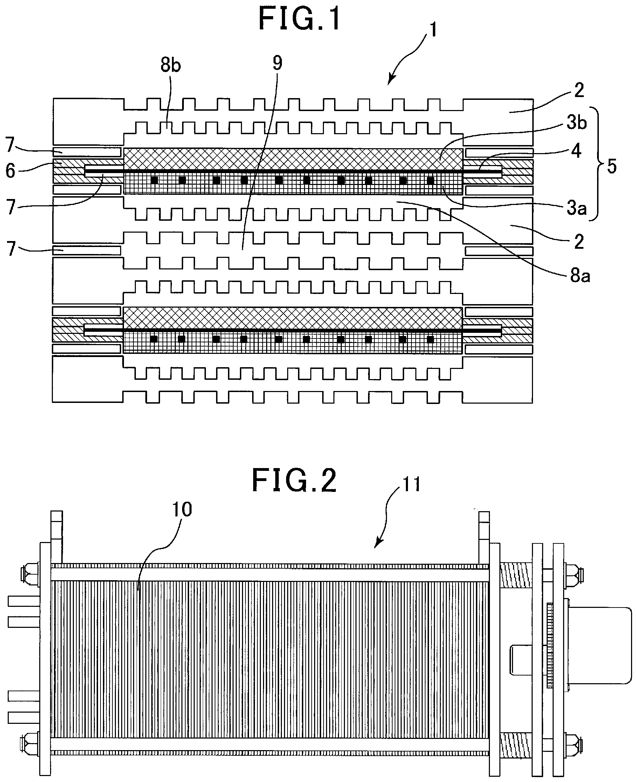

As illustrated in Fig. 1, a cell 1 of a solid polymer fuel cell has a structure including: an electrolyte membrane electrode assembly 5 (MEA) structured such that a polymer electrolyte membrane 4 is nipped between an air electrode 3a and a fuel electrode 3b; a frame 6 which supports the MEA; and separators 2 by which gas flow paths are formed.

In order to activate the solid polymer fuel cell, it is necessary to supply a fuel gas containing hydrogen to an anode electrode and supply an oxidation gas containing oxygen to a cathode electrode in such a separated manner that these gases can be isolated from each other. This is because there is a risk of lowering the power generation efficiency if one of the gases is mixed with the other gas due to insufficiency of the isolation. Against such a background, a sealing agent is used in many portions for the purpose of preventing leakage of the fuel gas, an oxygen gas, and so on. Specifically, the sealing agent is used between adjacent separators, between a separator and a frame, between a frame and an electrolyte membrane or MEA, and so on.

As to sealing agents for use in solid polymer fuel cells, studies have been made on: a thermosetting resin composition which uses a polyisobutylene-based polymer and causes a hydrosilylation reaction (see Patent Literature 1); a thermosetting resin composition which uses a fluoropolyether compound and causes a hydrosilylation reaction (see Patent Literature 2); a thermosetting resin composition which uses a fluoropolymer and causes a hydrosilylation reaction (see Patent Literature 3); and a thermosetting resin composition which uses an ethylene-propylene-diene rubber (see Patent Literature 4) as these compositions are rubber elastic bodies being excellent in gas permeation resistance, low moisture permeability, heat resistance, acid resistance, and flexibility.

### Citation List

### Patent Literatures

Patent Literature 1: Japanese Patent Application Publication No. 2004-111146
Patent Literature 2: Japanese Patent Application Publication No. 2004-075824
Patent Literature 3: Japanese Patent Application Publication No. 2007-100099
Patent Literature 4: Japanese Patent Application Publication No. 2011-124258

### Summary of Invention

However, using a polymer having a great molecular mass for improvement of the sealability, the heat curable resin compositions of Patent Literatures 1 to 4 have a problem that the viscosity is so high that the application workability is low. In addition, a method of adding a reactive diluent is generally used in order to decrease the viscosity of a curable resin composition, but has a problem that addition of the reactive diluent results in deterioration of physical properties such as tensile strength and extensibility of a cured product obtained by curing the curable resin composition (see Comparative Examples 2 to 6 to be described later).

The present invention has been made in view of the aforementioned circumstances and an object thereof is to provide a curable resin composition from which a cured product having high tensile strength and high extensibility can be obtained.

### Means for solution of the problems

The gist of the present invention is described below. The invention of the present application may be any one of the following [1] to[15]. The invention of the present application covers any combination of the specific elements according to the [1] to [15] formed as appropriate.
[1] A curable resin composition comprising the following ingredients (A) to (C):
   ingredient (A): a polymer which has one or more (meth)acryloyl groups and has a polyisobutylene skeleton containing a -[CH₂C(CH₃)₂]- unit;
   ingredient (B): a radical polymerization initiator; and
   ingredient (C): a monomer (c1) which has an alicyclic structure containing a (meth)acryloyl group and a substituent of a hydrocarbon group having 2 to 20 carbon atoms or a monomer (c2) which has a (meth)acryloyl group and a dicyclopentenyl group or adamantyl group.
[2] The curable resin composition according to [1], wherein the ingredient (c1) is (meth)acrylate having a t-butyl cyclohexyl group.
[3] The curable resin composition according to [1] or [2], wherein the ingredient (C) is one or more compounds selected from the group consisting of t-butylcyclohexyl (meth)acrylate, t-butylcyclohexyloxyethyl (meth)acrylate, dicyclopentenyl (meth)acrylate, dicyclopentenyloxyethyl (meth)acrylate, 1-adamantyl (meth)acrylate, 2-methyl-2-adamantyl (meth)acrylate, and 2-ethyl-2-adamantyl (meth)acrylate.
[4] The curable resin composition according to any one of [1] to [3], wherein the ingredient (A) is a polymer having a polyisobutylene skeleton represented by general formula (1): 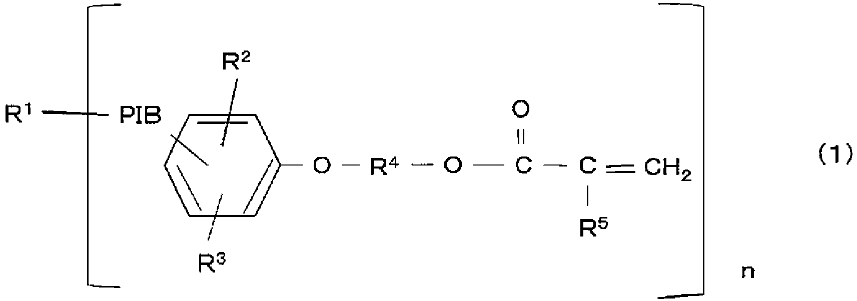 where R¹ represents a monovalent or polyvalent aromatic hydrocarbon group, or a monovalent or polyvalent aliphatic hydrocarbon group, PIB represents the polyisobutylene skeleton containing the -[CH₂C(CH₃)₂]- unit, R⁴ represents a divalent hydrocarbon group having 2 to 6 carbon atoms and optionally containing an oxygen atom, R² and R³ each independently represent a hydrogen atom or a monovalent hydrocarbon group having 1 to 20 carbon atoms, R⁵ represents a hydrogen atom, a methyl group, or an ethyl group, and n is an integer from 1 to 6.
[5] The curable resin composition according to any one of [1] to [4], wherein the ingredient (C) is contained at 3 to 300 parts by mass relative to 100 parts by mass of the ingredient (A).
[6] A curable sealing agent for a fuel cell, comprising the curable resin composition according to any one of [1] to [5].
[7] The curable sealing agent for a fuel cell according to [6], wherein the curable sealing agent for a fuel cell is a sealing agent for a periphery of any member selected from the group consisting of separators, frames, electrolytes, fuel electrodes, air electrodes, and electrolyte membrane electrode assemblies, which are members in a fuel cell.
[8] The curable sealing agent for a fuel cell according to [6], wherein the curable sealing agent is a sealing agent between adjacent separators in a fuel cell or a sealing agent between a frame and an electrolyte membrane or an electrolyte membrane electrode assembly in the fuel cell.
[9] The curable sealing agent for a fuel cell according to any one of [6] to [8], wherein the fuel cell is a solid polymer fuel cell.
[10] A cured product which is formed by curing the curable resin composition according to any one of [1] to [5] or the curable sealing agent according to any one of [6] to [9].
[11] A fuel cell comprising any seal selected from the group consisting of seals between adjacent separators in the fuel cell and a seal between a frame and an electrolyte membrane or an electrolyte membrane electrode assembly in the fuel cell, wherein the any seal is the cured product according to [10].
[12] The fuel cell according to [11], wherein the fuel cell is a solid polymer fuel cell.
[13] A method for sealing at least part of at least two flanges of seal target components including the at least two flanges, comprising the steps of: applying the curable resin composition according to any one of [1] to [5] to a surface of at least one of the flanges; sticking the one flange with the curable resin composition applied thereto onto the other flange with the curable resin composition interposed in between; and sealing the at least part of the at least two flanges by curing the curable resin composition.
[14] A method for sealing at least part of at least two flanges of seal target components including the at least two flanges, comprising the steps of: applying the curable resin composition according to any one of [1] to [5] to at least one of the flanges; curing the applied curable resin composition to form a gasket composed of a cured product of the curable resin composition; and placing the other flange on the gasket and sealing the at least part of the at least two flanges by pressure bonding the one flange with the curable resin composition applied thereto and the other flange together with the gasket interposed in between.
[15] A method for sealing at least part of at least two flanges of seal target components including the at least two flanges, comprising the steps of: placing a gasket formation mold on at least one of the flanges; injecting the curable resin composition according to any one of [1] to [5] into at least part of a cavity formed between the gasket formation mold and the flange on which the mold is placed; curing the curable resin composition to form a gasket composed of a cured product of the curable resin composition; detaching the mold from the one flange; and sealing the at least part of the at least two flanges by placing the other flange on the gasket and then pressure bonding the one and the other flanges together with the gasket interposed in between.

The present invention provides a curable resin composition from which a cured product having high tensile strength and high extensibility can be obtained.

### Brief Description of Drawings

Fig. 1 is a schematic cross-sectional view of a single cell of a fuel cell.
Fig. 2 is a schematic diagram illustrating the entire fuel cell.

### Description of Embodiments

The details of the invention are described below.

### <Curable Resin Composition>

The present invention relates to a curable resin composition comprising the following ingredients (A) to (C) and other optional components:
ingredient (A): a polymer which has one or more (meth)acryloyl groups and has a polyisobutylene skeleton containing a -[CH₂C(CH₃)₂]- unit;
ingredient (B): a radical polymerization initiator; and
ingredient (C): a monomer (c1) which has an alicyclic structure containing a (meth)acryloyl group and a substituent having 2 to 20 carbon atoms, or a monomer (c2) which has a (meth)acryloyl group and a dicyclopentenyl group or adamantyl group.

As the ingredients (A) to (C) and the other optional ingredients in the curable resin composition of the present invention, ingredients each satisfying any of the following conditions may be combined as appropriate for use. Note that the ingredients (A) to (C) are ingredients different from each other.

### <Ingredient (A)>

A ingredient (A) used in the present invention is not particularly limited as long as it is a polymer which has one or more (meth)acryloyl groups and has a polyisobutylene skeleton containing a -[CH₂C(CH₃)₂]- unit. The ingredient (A) may have, for example, a -[CH₂C(CH₃)₂]- unit (polyisobutylene skeleton), or may be a "constituent unit other than the -[CH₂C(CH₃)₂]- unit." The ingredient (A) suitably contains the -[CH₂C(CH₃)₂]- unit in an amount of, for example, 70% by mass or more, preferably 75% by mass or more, and more preferably 80% by mass or more relative to the total amount of the constituent units. In addition, the ingredient (A) suitably contains the -[CH₂C(CH₃)₂]- unit in an amount of, for example, 100% by mass or less, 95% by mass or less in another aspect, and 90% by mass or less in still another aspect. It is suitable that the ingredient (A) contains preferably 1 to 12, more preferably 2 to 8, further preferably 2 to 4, and particularly preferably 2 (meth)acryloyl groups. Note that, though not bound by theory, polymers in the present invention can be defined as a compound which has, for example, repeating units of monomers on the polymer main chain and which is composed of 100 or more repeating units. In addition, the (meth)acryloyl group may be present at any of a side chain and/or a terminal of the molecule, but is preferably present at a terminal of the molecule from the viewpoint of rubber elasticity.

As the foregoing ingredient (A), a polymer having a polyisobutylene skeleton represented by general formula (1) presented below is preferable from the viewpoint that a cured product having high tensile strength and high extensibility can be obtained. A specific example of the ingredient (A) is polyisobutylene having a (meth)acryloyloxy alkoxyphenyl group. Note that, although the main skeleton of the ingredient (A) in the present invention is a polyisobutylene skeleton, the monomers constituting this polyisobutylene skeleton may include other monomers for copolymerization in addition to the mainly used isobutylene as long as the effects of the present invention are not impaired. Note that the ingredient (A) is preferably in a liquid state at normal temperature (25°C) because of excellent application workability of the curable resin composition.

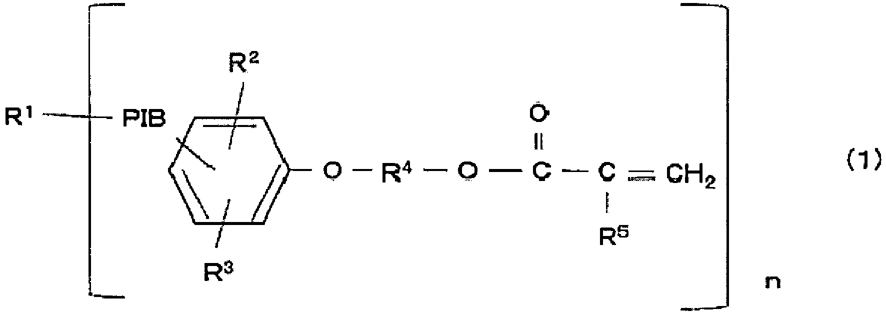

In formula (1), R¹ represents a monovalent or polyvalent aromatic hydrocarbon group, or a monovalent or polyvalent aliphatic hydrocarbon group, preferably a polyvalent aromatic hydrocarbon group, and particularly preferably a divalent phenylene group. PIB represents a polyisobutylene skeleton containing the -[CH₂C(CH₃)₂]- unit (or composed of the -[CH₂C(CH₃)₂]- unit). R⁴ represents a divalent hydrocarbon group having 2 to 6 carbon atoms and optionally containing an oxygen atom, and is preferably a divalent hydrocarbon group having 2 or 3 carbon atoms. R² and R³ each independently represent a hydrogen atom or a monovalent hydrocarbon group having 1 to 20 carbon atoms, and preferably a hydrogen atom. R⁵ represents a hydrogen atom, a methyl group, or an ethyl group, and preferably a hydrogen atom or a methyl group. Finally, n is an integer from 1 to 6, and particularly preferably an integer from 2 to 4.

For example, the molecular weight of the ingredient (A) of the present invention is, though not particularly limited, preferably 200 to 500,000, further preferably 1,000 to 100,000, and particularly preferably 3,000 to 50,000 in terms of number average molecular weight by chromatography measurement from the viewpoint of e.g. fluidity and physical properties after curing. Note that, unless otherwise specified, number average molecular weight was calculated by a standard polystyrene conversion method using size permeation chromatography (SEC).

The viscosity at 25°C of the ingredient (A) in the present invention is not particularly limited, but is, for example, 5 Pa·s or more, preferably 50 Pa·s or more, and more preferably 100 Pa·s or more and is, for example, 3000 Pa·s or less, preferably 2500 Pa·s or less, and more preferably 2000 Pa·s or less from the viewpoint of workability and the like. A particularly preferable viscosity is 1550 Pa·s. Note that, unless otherwise specified, the viscosity was measured at 25°C using a cone-plate type viscometer.

A method of producing the ingredient (A) is not particularly limited, and a known method can be used. Examples of the method include a method of obtaining the ingredient (A) by reacting a terminal hydroxyl group polyisobutylene with acryloyl chloride or methacryloyl chloride, which is disclosed in Polymer Bulletin, Volume 6, pp. 135 to 141 (1981), T. P. Liao and J. P. Kennedy and Polyer Bulletin, Volume 20, pp. 253 to 260 (1988), Puskas et al. In addition, other examples of the method of producing the ingredient (A) include a method of obtaining ingredient (A) by reacting a terminal hydroxyl group polyisobutylene, a (meth)acryloyl group, and a compound having an isocyanate group, a method of obtaining ingredient (A) by reacting a terminal hydroxyl group polyisobutylene, a compound having an isocyanate group, and a compound having a hydroxyl group, a method of obtaining the ingredient (A) by reacting a terminal hydroxyl group polyisobutylene and a (meth)acrylic acid or a (meth)acrylic acid lower ester by use of the dehydration esterification method or the transesterification method, and the like.

In addition, a method of producing the polyisobutylene represented by general formula (1) described above is not particularly limited, but is preferably a method of reacting a halogen-terminated polyisobutylene with a compound having a (meth)acryloyl group and a phenoxy group as represented by the following general formula (2), which is disclosed in Japanese Patent Application Publication No. 2013-216782. Additionally, the halogen-terminated polyisobutylene can be obtained by a known method, for example, be obtained by cationic polymerization and more preferably obtained by living cationic polymerization.

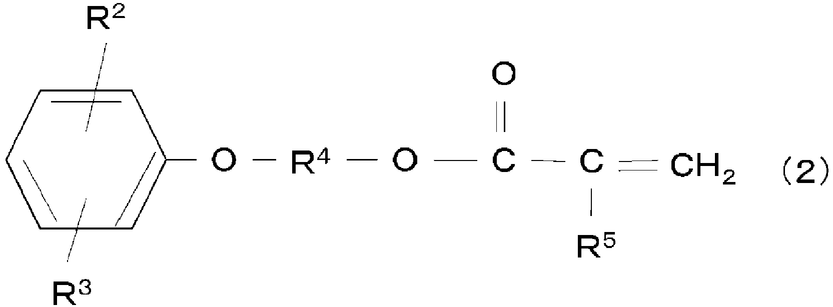

In formula (2), R², R³, R⁴, and R⁵ may be as defined in formula (1) described above. Specifically, R⁴ represents a divalent hydrocarbon group having 2 to 6 carbon atoms and optionally containing an oxygen atom. R² and R³ each independently represent a hydrogen atom or a monovalent hydrocarbon group having 1 to 20 carbon atoms. R⁵ represents a hydrogen atom, a methyl group, or an ethyl group. Examples of compounds represented by the above formula (2) include phenoxymethyl (meth)acrylate, phenoxyethyl (meth)acrylate, phenoxypropyl (meth)acrylate, phenoxybutyl (meth)acrylate, phenoxypentyl (meth)acrylate, and so on. Preferable compounds are phenoxyethyl (meth)acrylate, phenoxypropyl (meth)acrylate, phenoxybutyl (meth)acrylate, phenoxypentyl (meth)acrylate, and so on.

### <(B) Ingredient>

An ingredient (B) usable in the present invention is a radical polymerization initiator. Such ingredients (B) include a photo-radical polymerization initiator, an organic peroxide (thermal radical polymerization initiator), and so on. As a scheme of curing a radical curable resin composition of the present invention, photo curing, thermal curing or redox curing can be selected depending on a selection of the ingredient (B) of the present invention. For example, a photo-radical polymerization initiator can be selected in the case where "photo-curability" is desired to be imparted to a radical curable resin composition, or an organic peroxide can be selected in the case where a property of "curing by heat or redox reaction" is desired to be imparted to a radical curable resin composition.

The amount of the ingredient (B) of the present invention blended is, but not particularly limited to, preferably 0.1 to 30 parts by mass, further preferably 0.5 to 20 parts by mass, and particularly preferably 1 to 15 parts by mass relative to 100 parts by mass of the ingredient (A) from the viewpoint that it is possible to achieve both surface curability and deep curability.

The photo-radical polymerization initiator that is one of the ingredients (B) usable in the present invention may be any compound not limited, as long as the compound can generate radicals by irradiation with light (active energy rays). Here, the active energy rays include all light in a broad sense including radial rays such as α-rays and β-rays, electromagnetic waves such as γ-rays and X-rays, electron beams (EB), ultraviolet rays having a wavelength of about 100 to 400 nm, visible light rays having a wavelength of about 400 to 800 nm, and so on, and are preferably ultraviolet rays. Examples of photo-radical polymerization initiators as the ingredient (B) include acetophenone-based photo-radical polymerization initiators, benzoin-based photo-radical polymerization initiators, benzophenone-based photo-radical polymerization initiators, thioxanthone-based photo-radical polymerization initiators, acylphosphine oxide-based photo-radical polymerization initiators, titanocene-based photo-radical polymerization initiators, and so on. Among these, the acetophenone-based photo-radical polymerization initiators and the acylphosphine oxide-based photo-radical polymerization initiators are preferable from the viewpoint that it is possible to obtain a cured product excellent in surface curability and deep curability by irradiation with active energy rays. Additionally, these may be used singly or in combination of two or more kinds.

Examples of the acetophenone-based photo-radical polymerization initiators include, but not limited to, diethoxyacetophenone, 2-hydroxy-2-methyl-1-phenyl-propan-1-one, benzyl dimethyl ketal, 4-(2-hydroxyethoxy)phenyl-(2-hydroxy-2-propyl)ketone, 1-hydroxy-cyclohexyl-phenyl-ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer. Examples of the commercially available products of the acetophenone-based photo-radical polymerization initiators include IRGACURE 184, IRGACURE 1173, IRGACURE 2959, IRGACURE 127 (manufactured by BASF), and ESACUREKIP-150 (manufactured by Lamberti s. p. a.).

Examples of the acylphosphine oxide-based photo-radical polymerization initiators include, but not limited to, bis(2,4,6-trimethylbenzoyl)-phenyl-phosphine oxide and 2,4,6-trimethylbenzoyl-diphenyl-phosphine oxide. Examples of the commercially available products of the acylphosphine oxide-based photo-radical polymerization initiators include IRGACURE TPO, IRGACURE 819, and IRGACURE 819 DW (manufactured by BASF).

The organic peroxide that is one of the ingredients (B) usable in the present invention may be any compound not limited, as long as the compound can generate radical species by heating or redox reaction. Here, appropriate heating is at temperature of, for example, 50°C or higher, preferably 80°C or higher, and more preferably 100°C or higher, and the organic peroxide curable by heating is also particularly referred to as a thermal radical polymerization initiator. The redox reaction is also referred to as an oxidation-reduction reaction, and is a phenomenon in which radical species released from the organic peroxide cause an oxidation-reduction reaction. An example of the ingredient (B) which causes a redox reaction is a reaction initiator which initiates a reaction, for example, upon contact with metal under an air (oxide)-blocked condition and appropriate temperature setting (for example, at 5°C or higher, preferably at room temperature (25°C) ± about 5°C). Use of a redox reaction is preferable because radical species can be generated at room temperature.

Examples of organic peroxides as the ingredient (B) include, but are not limited to: ketone peroxides such as methylethylketone peroxide, cyclohexanone peroxide, 3,3,5-trimethylcyclohexanone peroxide, methylcyclohexanone peroxide, methyl acetoacetate peroxide, and acetylacetone peroxide; peroxy ketals such as 1,1-bis(t-butylperoxy)-3,3,5-trimethyl cyclohexane, 1,1-bis(t-butylperoxy) cyclohexane, 2,2-bis(t-butylperoxy) octane, n-butyl-4,4-bis(t-butylperoxy) valerate, and 2,2-bis(t-butylperoxy) butane; hydroperoxides such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide; dialkyl peroxides such as di-t-butyl peroxide, t-butylcumyl peroxide, dicumyl peroxide, α,α'-bis(t-butylperoxy-m-isopropyl) benzene, 2,5-dimethyl-2,5-di(t-butylperoxy) hexane, and 2,5-dimethyl-2,5-di(t-butylperoxy) hexyne-3; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichloro benzoyl peroxide, and m-toluoyl peroxide; peroxy dicarbonates such as diisopropyl peroxy dicarbonate, di 2-ethylhexyl peroxy dicarbonate, di-n-propyl peroxy dicarbonate, bis-(4-t-butylcyclohexyl) peroxy dicarbonate, dimyristyl peroxy dicarbonate, di-2-ethoxyethyl peroxy dicarbonate, dimethoxy isopropyl peroxy dicarbonate, di(3-methyl-3-methoxybutyl) peroxy dicarbonate, and diallyl peroxy dicarbonate; peroxyesters such as t-butyl peroxy acetate, t-butyl peroxy isobutyrate, t-butyl peroxy pivalate, t-butyl peroxy neodecanoate, cumyl peroxy neodecanoate, t-butyl peroxy-2-ethylhexanoate, t-butylperoxy-3,5,5-trimethylhexanoate, t-butyl peroxy laurate, t-butyl peroxy benzoate, di-t-butyl peroxy isophthalate, 2,5-dimethyl-2,5-di(benzoylperoxy) hexane, t-butyl peroxy maleic acid, t-butyl peroxy isopropyl carbonate, cumyl peroxy octoate, t-hexyl peroxy neodecanoate, t-hexyl peroxy pivalate, t-butyl peroxy neohexanoate, t-hexyl peroxy neohexanoate, and cumyl peroxy neohexanoate; acetyl cyclohexyl sulfonyl peroxide; t-butyl peroxy allylcarbonates; and the like. These organic peroxides may be used singly or in combination of two or more kinds. Among these, the cumene hydroperoxide is preferably used from the viewpoint of curability.

When an organic peroxide is used as the ingredient (B), a curing accelerator may be blended for the purpose of accelerating the redox reaction. Such a curing accelerator is not limited in particular, but saccharin (o-benzoic sulfimid), a hydrazine compound, an amine compound, a mercaptan compound, a transition metal-containing compound or the like may be preferably used.

Examples of the hydrazine compound include 1-acetyl-2-phenyl hydrazine, 1-acetyl-2(p-tolyl)hydrazine, 1-benzoyl-2-phenyl hydrazine, 1-(1',1',1'-trifluoro) acetyl-2-phenyl hydrazine, 1,5-diphenyl-carbohydrazine, 1-formyl-2-phenyl hydrazine, 1-acetyl-2-(p-bromophenyl)hydrazine, 1-acetyl-2-(p-nitrophenyl)hydrazine, 1-acetyl-2-(2'-phenylethylhydrazine), ethylcarbazate, p-nitrophenyl hydrazine, p-trisulfonyl hydrazide, and the like.

Examples of the amine compound include heterocyclic secondary amines such as 2-ethylhexylamine, 1,2,3,4-tetrahydroquinone, and 1,2,3,4-tetrahydroquinaldine; heterocyclic tertiary amines such as quinoline, methylquinoline, quinaldine, and quinoxaline phenazine; aromatic tertiary amines such as N,N-dimethyl-para-toluidine, N,N-dimethyl-anisidine, and N,N-dimethylaniline; azole-based compounds such as 1,2,4-triazole, oxazole, oxadiazole, thiadiazole, benzotriazole, hydroxybenzotriazole, benzoxazole, 1,2,3-benzothiadiazole, and 3-mercaptobenzotrizole; and the like.

Examples of the mercaptan compound include n-dodecyl mercaptan, ethylmercaptan, butylmercaptan, tris-[(3 -mercaptopropionyloxy)-ethyl]-isocyanurate, pentaerythritol tetrakis(3-mercaptopropionate), dipentaerythritol hexakis(3-mercapto propionate), trimethylolpropane tris(3-mercaptopropionate), trimethylolpropane tristhioglycolate, pentaerythritol tetrakisthioglycolate, and the like.

As the transition metal-containing compound, a metal chelate complex salt is preferably used. Examples thereof include pentadione iron, pentadione cobalt, pentadione copper, propylenediamine copper, ethylenediamine copper, iron naphthate, nickel naphthate, cobalt naphthate, copper naphthate, copper octate, iron hexoate, iron propionate, acetylacetone vanadium, and the like.

The aforementioned curing accelerators may be used singly or in combination of two or more kinds. Among these, a mixture of the saccharin, the hydrazine-based compound, the amine-based compound, and the transition metal-containing compound is more preferable because it produces a good curing acceleration effect.

### <(C) Ingredient>

An ingredient (C) of the present invention is a monomer (c1) which has an alicyclic structure containing a (meth)acryloyl group and a substituent of a hydrocarbon group having 2 to 20 carbon atoms, or a monomer (c2) which has a (meth)acryloyl group and a dicyclopentenyl group or adamantyl group. The ingredient (C) of the present invention rapidly cures in combination with the other ingredients of the present invention, and therefore provides a curable resin composition from which a cured product achieving both high tensile strength and high extensibility can be obtained. The ingredient (C) of the present invention may contain a site such as an ether bond other than hydrocarbon sites. Note that a monomer comprising a dicyclopentenyl group which has a substituent of a hydrocarbon group having 2 to 20 carbon atoms or an adamantyl group having a substituent of a hydrocarbon group having 2 to 20 carbon atoms is treated as the ingredient (c1) in the present invention. Hereinafter, the monomer (c1) and the monomer (c2) are described.

### <Monomer (c1)>

The monomer (c1) is a monomer having an alicyclic structure containing a (i) (meth)acryloyl group and a (ii) substituent of a hydrocarbon group having 2 to 20 carbon atoms. As the (i) (meth)acryloyl group, there are an acryloyl group and a (meth)acryloyl group. Of these, the (meth)acryloyl group is preferable because a cured product achieves much higher tensile strength and higher extensibility. The (ii) substituent of the hydrocarbon group having 2 to 20 carbon atoms may have, for example, 2 to 10 carbon atoms, and preferably 3 to 6 carbon atoms. Note that the hydrocarbon group having 2 to 20 carbon atoms in the (ii) does not include carbon atoms in the alicyclic structure. Specific examples of the substituent of the hydrocarbon group having 2 to 20 carbon atoms include an ethyl group, a propyl group, a butyl group, a t-butyl group, a pentyl group, and the like. The t-butyl group is more preferable.

Here, the alicyclic structure is cyclohexyl or the like.

The monomer (c1) is not particularly limited, and an example thereof is a (meth)acrylate having a t-butyl cyclohexyl group such as t-butyl cyclohexyl (meth)acrylate or t-butyl cyclohexyloxy ethyl(meth)acrylate.

### <Monomer (c2)>

The monomer (c2) is a monomer containing a (i) (meth)acryloyl group and a (iii) dicyclopentenyl group or adamantyl group. Specific examples of the (i) (meth)acryloyl group are as described above in the monomer (c1).

The monomer (c2) is not particularly limited, but examples thereof include dicyclopentenyl (meth)acrylate, dicyclopentenyl oxyethyl (meth)acrylate, 1-adamantyl (meth)acrylate, 2-methyl-2-adamantyl (meth)acrylate, 2-ethyl-2-adamantyl (meth)acrylate, and the like. Additionally, these may be used singly or in combination of two or more kinds.

The amount of the ingredient (C) blended is preferably 3 to 300 parts by mass, more preferably 5 to 200 parts by mass, and particularly preferably 7 to 100 parts by mass relative to 100 parts by mass of the ingredient (A). The above amount is preferable because the amount of 3 parts by mass or more has no risk of a decrease in the surface curability and the amount of 300 parts by mass or less enables a cured product having particularly low moisture permeability to be obtained.

### <Optional Ingredients>

Additives can be used in the composition of the present invention as long as the additives do not hinder the object of the present invention. The additives include (meth)acrylate monomers (not including the ingredient (C) of the present invention), oligomers having a (meth)acryloyl group (not including the ingredient (A) of the present invention), various elastomers such as styrene-based copolymers, fillers, preservation stabilizer, antioxidants, photo-stabilizers, adhesion promoters, plasticizers, pigments, flame retardants, surfactants, and the like.

In the present invention, a (meth)acrylate monomer (not including the ingredient (C) of the present invention) may be further blended. The (meth)acrylate monomer is a compound which is polymerized by radical species generated by the ingredient (B) of the present invention and is used as a reactive diluent. Note that the (meth)acrylate monomer is other than the ingredient (C) of the present invention. Further, as the (meth)acrylate monomer, for example, monofunctional, difunctional, trifunctional, and polyfunctional monomers and the like can be used. Among them, a (meth)acrylate monomer containing an alkyl group having 5 to 30 carbon atoms is preferable because it is compatible with the component (A) of the present invention and is excellent in the curability.

The (meth)acrylate monomer containing an alkyl group having 5 to 30 carbon atoms is not particularly limited and examples thereof include 2-ethylhexyl(meth)acrylate, octyl(meth)acrylate, isooctyl(meth)acrylate, decyl(meth)acrylate, dodecyl(meth)acrylate, isodecyl(meth)acrylate, lauryl(meth)acrylate, n-octadecyl(meth)acrylate, isooctadecyl(meth)acrylate, nonadecane(meth)acrylate, 3-heptyldecyl-1-(meth)acrylate, stearyl(meth)acrylate, and the like. The (meth)acrylate monomer containing an alkyl group having 5 to 30 carbon atoms may have 7 to 25 carbon atoms or 8 to 20 carbon atoms, and the alkyl group may be an alicyclic group. As the (meth)acrylate monomer containing an alicyclic group having 5 to 30 carbon atoms (other than the ingredient (C) of the present invention), there are cyclohexyl(meth)acrylate, trimethylcyclohexyl(meth)acrylate, dicyclopentanyl(meth)acrylate, isobornyl(meth)acrylate, and the like. These (meth)acrylate monomers may be used singly or as a mixture of two or more kinds.

The amount of this (meth)acrylate monomer blended is preferably 3 to 300 parts by mass, more preferably 5 to 200 parts by mass, and particularly preferably 10 to 100 parts by mass relative to 100 parts by mass of the ingredient (A).

Examples of the oligomers having (meth)acryloyl groups (not containing the ingredient (A) of the present invention) include, but not particularly limited to, urethane (meth)acrylates having a polybutadiene skeleton, urethane (meth)acrylates having a hydrogenated polybutadiene skeleton, urethane (meth)acrylates having a polycarbonate skeleton, urethane (meth)acrylates having a polyether skeleton, urethane (meth)acrylates having a polyester skeleton, urethane (meth)acrylates having a castor oil skeleton, isoprene-based (meth)acrylates, hydrogenated isoprene-based (meth)acrylates, epoxy (meth)acrylates, and (meth)acryl group-containing acrylic polymers. Particularly preferable are the urethane (meth)acrylates having a polybutadiene skeleton, the urethane (meth)acrylates having a hydrogenated polybutadiene skeleton, the urethane (meth)acrylates having a castor oil skeleton, the isoprene-based (meth)acrylates, and the hydrogenated isoprene-based (meth)acrylates from the viewpoint of excellent compatibility with the ingredient (A) and the (meth)acrylate monomer as optional ingredients of the present invention. Note that in the present invention, oligomers refer to compounds which have repeating units of monomers on the main chain and are composed of 2 to 100 repeating units. Additionally, these may be used singly or in combination of two or more kinds.

Styrene-based copolymers may be blended in the present invention for the purpose of adjusting the rubber physical property of the cured product. For example, the styrene-based copolymers include, but are not particularly limited to, styrene-butadiene copolymers, styrene-isoprene copolymers (SIP), styrene-butadiene copolymers (SB), styrene-ethylene-butylene-styrene copolymers (SEBS), styrene-isobutylene-styrene copolymers (SIBS), acrylonitrile-styrene copolymers (AS), styrene-butadiene-acrylonitrile copolymers (ABS), and the like.

For the purpose of improving e.g. the elastic modulus and the fluidity of the cured product, fillers may be added to the present invention to an extent that does not impair the storage stability. Specific examples thereof include organic powders, inorganic powders, metallic powders, and the like. Fillers of inorganic powder include glass, fumed silica, alumina, mica, ceramics, silicone rubber powders, calcium carbonate, aluminum nitride, carbon powders, kaolin clay, dried clay minerals, dried diatomaceous earth, and the like. The amount of inorganic powder blended is preferably about 0.1 to 100 parts by mass relative to 100 parts by mass of the ingredient (A). The above amount is preferable because the amount of 0.1 parts by mass or more can be expected to produce a sufficient effect and the amount of 100 parts by mass or less does not affect the fluidity of the curable resin composition or lower the workability.

Fumed silica can be blended for the purpose of adjusting the viscosity of the curable resin composition or improving the mechanical strength of the cured product. Preferably, it is possible to use ones hydrophobically treated with organochlorosilanes, polyorganosiloxane, hexamethyldisilazane, or the like. Specific examples of the fumed silica include, for example, commercially available products manufactured by Nippon Aerosil Co., Ltd., such as trade name Aerosil R 974, R 972, R 972 V, R 972 CF, R 805, R 812, R 812 S, R 816, R 8200, RY 200, RX 200, RY 200 S, and R 202.

Fillers of organic powder include, for example, polyethylene, polypropylene, nylon, cross-linked acrylic, cross-linked polystyrene, polyesters, polyvinyl alcohols, polyvinyl butyral, and polycarbonate. The amount of organic powder blended is preferably about 0.1 to 100 parts by mass relative to 100 parts by mass of the ingredient (A). The above amount is preferable because the amount of 0.1 parts by mass or more can be expected to produce a sufficient effect and the amount of 100 parts by mass or less does not affect the fluidity of the photocurable resin composition or lower the workability.

A preservation stabilizer may be added to the present invention. As the preservation stabilizer, radical absorbers such as benzoquinone, hydroquinone, and hydroquinone monomethyl ether, metal chelating agents such as ethylenediamine tetraacetic acid or 2-sodium salts thereof, oxalic acid, acetylacetone, and o-aminophenol, and the like can be added.

Antioxidants may be added to the present invention. The antioxidant include, for example, quinone-based compounds such as β-naphthoquinone, 2-methoxy-1,4-naphthoquinone, methyl hydroquinone, hydroquinone, hydroquinone monomethyl ether, mono-tert-butyl hydroquinone, 2,5-di-tert-butyl hydroquinone, p-benzoquinone, 2,5-diphenyl-p-benzoquinone, and 2,5-di-tert-butyl-p-benzoquinone; phenols such as phenothiazine, 2,2-methylene-bis(4-methyl-6-tert-butylphenol), catechol, tert-butyl catechol, 2-butyl-4-hydroxyanisole, 2,6-di-tert-butyl-p-cresol, 2-tert-butyl-6-(3-tert-butyl-2-hydroxy-5-methylbenzyl)-4-methylphenyl acrylate, 2-[1-(2-hydroxy-3,5-di-tert-pentylphenyl) ethyl]-4,6-di-tert-pentylphenyl acrylate, 4,4'-butylidenebis(6-tert-butyl-3-methyl phenol), 4,4'-thiobis(6-tert-butyl-3-methyl phenol), 3,9-bis[2-[3-(3-tert-butyl-4-hydroxy-5-methylphenyl) propionyloxy]-1,1-dimethylethyl]-2,4,8,10-tetraoxaspiro [5,5] undecane, pentaerythritol tetrakis[3-(3,5-di-tert-butyl-4-hydroxyphenyl) propionate], thiodiethylene bis[3-(3,5-di-tert-butyl-4-hydroxyphenyl) propionate], octadecyl-3-(3,5-di-tert-butyl-4-hydroxyphenyl) propionate, N,N'-hexane-1,6-diylbis[3-(3,5-di-tert-butyl-4-hydroxyphenyl) propionamide], benzene propanoic acid, 3,5-bis(1,1-dimethylethyl)-4-hydroxy, C₇-C₉ side chain alkyl ester, 2,4-dimethyl-6-(1-methylpentadecyl) phenol, diethyl [[3,5-bis(1,1-dimethylethyl)-4-hydroxyphenyl] methyl] phosphonate, 3,3',3",5,5',5"-hexa-tert-butyl-a,a',a"-(mesitylene-2,4,6-tolyl) tri-p-cresol, calcium diethyl bis[[3,5-bis(1,1-dimethylethyl)-4-hydroxyphenyl] methyl] phosphonate, 4,6-bis(octylthiomethyl)-o-cresol, ethylenebis(oxyethylene) bis[3-(5-tert-butyl-4-hydroxy-m-tolyl) propionate], hexamethylenebis[3-(3,5-di-tert-butyl-4-hydroxyphenyl) propionate, 1,3,5-tris(3,5-di-tert-butyl-4-hydroxybenzyl)-1,3,5-triazine-2,4,6 (1H,3H,5H)-trione, 1,3,5-tris[(4-tert-butyl-3 -hydroxy-2,6-xylyl) methyl]-1,3,5-triazine-2,4,6 (1H,3H,5H)-trione, a reaction product of N-phenylbenzenamine and 2,4,6-trimethylpentene, 2,6-di-tert-butyl-4-(4,6-bis(octylthio)-1,3,5-triazine-2-ylamino) phenol, picric acid, and citric acid; phosphorus-based compounds such as tris(2,4-di-tert-butylphenyl)phosphite, tris[2-[[2,4,8,10-tetra-tert-butyldibenzo[d,f][1,3,2]dioxaphosphefin-6-yl]oxy]ethyl]amin e, bis(2,4-di-tert-butylphenyl)pentaerythritol diphosphite, bis[2,4-bis(1,1-dimethylethyl)-6-methylphenyl]ethyl ester phosphorous acid, tetrakis(2,4-di-tert-butylphenyl)[1,1-bisphenyl]-4,4'-diyl bisphosphonite, 6-[3-(3-tert-butyl-4-hydroxy-5-methylphenyl)propoxy]-2,4,8,10-tetra-tert-butyl dibenz[d,f][1,3,2]dioxaphosphefin; sulfur-based compounds such as dilauryl 3,3'-thiodipropionate, dimyristyl 3,3'-thiodipropionate, distearyl 3,3'-thiodipropionate, pentaerythrityl tetrakis(3-lauryl thiopropionate), and 2-mercaptobenzimidazole; amine-based compounds such as phenothiazine; lactone-based compounds; and vitamin E-based compounds. Among these, phenol-based compounds are preferable.

Light stabilizers may be added to the present invention. The light stabilizers include, for example, hindered amine types such as bis(2,2,6,6-tetramethyl-4-piperidyl)sebacate, bis(1,2,2, 6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-dimethylethyl)-4-hydroxyphenyl] methyl]butyl malonate, decanedioic acid bis(2,2,6,6-tetramethyl-1(octyloxy)-4-piperidinyl)ester, a reaction product of 1,1-dimethyl ethyl hydroperoxide and octane, N,N',N",N"'-tetrakis-(4,6-bis-(butyl-(N-methyl-2,2,6,6-tetramethylpiperidine-4-yl)amin o)-triazine-2-yl)-4,7-diazadecane-1,10-diamine, a polycondensate of N-(2,2,6,6-tetramethyl-4-piperidyl)butylamine with dibutylamine-1,3,5-triazine·N,N'-bis(2,2,6,6-tetramethyl-4-piperidyl-1,6-hexamethylene diamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], a polymer of dimethyl succinate and 4-hydroxy-2,2,6,6-tetramethyl-1-piperidine ethanol, 2,2,4,4-tetramethyl-20-(β-lauryloxycarbonyl)ethyl-7-oxa-3,20-diazadispiro [5,1,11,2] heneicosan-21-one, β-alanine, N,-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidine-2,5-dione, 2,2,4,4-tetramethyl-7-oxa-3,20-diazadispiro [5,1,11,2] heneicosan-21-one, 2,2,4,4-tetramethyl-21-oxa-3,20-diazacyclo-[5,1,11,2]-heneicosan-20-propanoic acid dodecyl ester/tetradecyl ester, propanedioic acid, [(4-methoxyphenyl)-methylene]-bis(1,2,2,6,6-pentamethyl-4-piperidinyl)ester, higher fatty acid esters of 2,2,6,6-tetramethyl-4-piperidinol, 1,3-benzenedicarboxamide, N,N'-bis(2,2,6,6-tetramethyl-4-piperidinyl); benzophenone-based compounds such as octabenzone; benzotriazole-based compounds such as 2-(2H-benzotriazole-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-3,5-di-tert-pentylphenyl)benzotriazole, a reaction product of methyl 3-(3-(2H-benzotriazole-2-yl)-5-tert-butyl-4-hydroxyphenyl)propionate and polyethylene glycol, 2-(2H-benzotriazole-2-yl)-6-dodecyl-4-methyl phenol; benzoate-based compounds such as 2,4-di-tert-butylphenyl-3,5-di-tert-butyl-4-hydroxybenzoate; and triazine-based compounds such as 2-(4,6-diphenyl-1,3,5-triazine-2-yl)-5-[(hexyl)oxy]phenol. Hindered amine-based compounds are particularly preferable.

Adhesion promoters may be added to the present invention. Examples of the adhesion promoters include 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, methacryloxyoctyl trimethoxysilane, vinyl trimethoxysilane, vinyl trichlorosilane, vinyl triethoxysilane, vinyl-tris(β-methoxyethoxy)silane, γ-chloropropyltrimethoxysilane, β-(3,4-epoxycyclohexyl)ethyltrimethoxysilane, γ-glycidoxypropyltrimethoxysilane, γ-mercaptopropyltrimethoxysilane, γ-aminopropyltriethoxysilane, N-β-(aminoethyl)-γ-aminopropyltrimethoxysilane, N-β-(aminoethyl)-γ-aminopropylmethyldimethoxysilane, γ-ureidopropyltriethoxysilane, hydroxyethyl methacrylate phosphate ester, methacryloxyoxyethyl acid phosphate, methacryloxyoxyethyl acid phosphate monoethylamine half salt, 2-hydroxyethyl methacrylic acid phosphate, and the like. Preferable among these are hydroxyethyl methacrylate phosphate ester, methacryloxyoxyethyl acid phosphate, methacryloxyoxyethyl acid phosphate monoethylamine half salt, 2-hydroxyethyl methacrylic acid phosphate, and the like. The content of the adhesion promoter is preferably 0.05 to 30 parts by mass and further preferably 0.2 to 10 parts by mass relative to 100 parts by mass of the ingredient (A).

A plasticizer, a pigment, a flame retardant, and a surfactant may be added to the present invention. Examples of the plasticizer include: petroleum-based process oils such as paraffine-based process oil, naphthenic process oil, and aromatic process oil; dialkyl dibasic acids such as acrylic plasticizer, diethyl phthalate, dioctyl phthalate, and dibutyl adipate; low molecular weight liquid polymer such as liquid polybutene and liquid polyisoprene; and the like. Examples of the pigment include carbon and the like. Examples of the flame retardant include hydrated metal compound-based, phosphorus -based, silicone-based, and nitrogen compound-based flame retardants and the like Examples of the surfactant include anionic surfactants, nonionic surfactants, nonionic surfactants, and the like. These may be used singly or in combination of two or more kinds.

The curable resin composition of the present invention can be produced by a conventionally known method. It is possible to produce the curable resin composition by, for example, blending predetermined amounts of the ingredient (A) to the ingredient (C) as well as other optional ingredients, followed by mixing at a temperature of preferably 10 to 70°C for preferably 0.1 to 5 hours using a mixing means such as a mixer. In addition, the production is conducted preferably under a light-shielding environment.

### <Application Method>

As a method for applying the curable resin composition of the present invention to an adherend, a publicly known method for a sealing agent or an adhesive is used. For example, it is possible to use methods such as dispensing using an automatic coater, spraying, inkjet, screen printing, gravure printing, dipping, and spin coating. The curable resin composition of the present invention is preferably liquid at 25°C from the viewpoint of easiness in application.

### <Curing Method>

The curable resin composition of the present invention may employ various curing methods according to types of radical polymerization initiators. Specifically, if the radical polymerization initiator is a photo-radical polymerization initiator, the initiator initiates the curing reaction when irradiated with light (active energy rays). If the radical polymerization initiator is an organic peroxide, the initiator initiates the curing reaction when heated or when brought into contact with metal ions under an air-blocked condition. Consider the case of curing the curable resin composition of the present invention by irradiation with light such as ultraviolet rays and visible light (active energy rays). Examples of light sources include, but not particularly limited to, low pressure mercury lamps, medium pressure mercury lamps, high pressure mercury lamps, extra high pressure mercury lamps, black light lamps, microwave excited mercury lamps, metal halide lamps, sodium lamps, halogen lamps, xenon lamps, LEDs, fluorescent lamps, sunlight, and electron beam irradiation devices. The irradiation dose of irradiation with light is preferably 10 kJ/m² or more and more preferably 15 kJ/m² or more from the viewpoint of the properties of the cured product. If the ingredient (B) is an organic peroxide and initiates curing when heated, the appropriate heating temperature is, for example, 50°C or higher, preferably 80°C or higher, and more preferably 100°C or higher.

### <Cured Product>

A cured product of the present invention can be obtained by curing the curable resin composition of the present invention in any of the foregoing curing methods by irradiation with light (active energy rays), by contact with metal ions under the air-blocked condition, or by heating. A cured product of the present invention may be any product obtained by curing the curable resin composition of the present invention regardless of a curing method employed.

### <Usage and Sealing Agent>

A preferred usage of the curable resin composition of the present invention or a cured product thereof is a curable sealing agent. In the present invention, the sealing agent includes usages such as adhesives, coating agents, casting agents, and potting agents. When used in the above usages, a curable resin composition of the present invention is preferably liquid at 25°C.

Since the curable resin composition of the present invention or the cured product thereof is a rubber elastic body being excellent in low gas permeability, low moisture permeability, heat resistance, acid resistance, and flexibility, specific usages of the sealing agents include stacked bodies for fuel cells, solar cells, dye-sensitized solar cells, lithium ion batteries, electrolytic capacitors, liquid crystal displays, organic EL displays, electronic paper, LEDs, hard disk devices, photodiodes, optical communication/circuits, electric wires/cables/optical fibers, optical isolators, IC cards, and the like; sensors; substrates; pharmaceutical and medical instruments and equipment; and the like. Among these usages, the usage for fuel cells is particularly preferable because the curable resin composition of the present invention rapidly cures by heating, irradiation with active energy rays, or the like and a cured product thereof is excellent in high tensile strength and high extensibility.

### <Fuel Cell>

The fuel cell is a power generator that extracts electric power by chemically reacting hydrogen with oxygen. Here, as for fuel cells, there are four types including a solid polymer fuel cell, a phosphoric acid fuel cell, a molten carbonate fuel cell, and a solid oxide fuel cell. Among them, the solid polymer fuel cell achieves high power generation efficiency while having a relatively low operating temperature (around 80°C), and therefore is used for applications such as power sources for automobiles, power generators for households, small power source for electronic equipment such as a mobile phone, and power sources for emergency.

As illustrated in Fig. 1, the cell 1 of the typical solid polymer fuel cell has the structure including: the electrolyte membrane electrode assembly 5 (MEA) structured such that the polymer electrolyte membrane 4 is nipped between the air electrode 3a and the fuel electrode 3b; the frame 6 supporting the MEA; and the separators 2 in which the gas flow paths are formed. In order to activate the solid polymer fuel cell, a fuel gas (hydrogen gas) and an oxidation gas (oxygen gas) are supplied through an oxidation gas flow path 8a and a fuel gas flow path 8b. Moreover, for the purpose of suppressing heat generation during power generation, cooling water flows through a flow path 9. Note that a package including several hundreds of such cells stacked on one another is referred to as a cell stack 10 as illustrated in Fig. 2.

When the fuel gas (hydrogen gas) is supplied to the fuel electrode and the oxidation gas (oxygen gas) is supplied to the oxygen electrode (air electrode), the following reactions occur at the respective electrodes, and a reaction to generate water (H₂ + 1/2O₂ → H₂O) occurs as a whole. To be more specific, protons (H+) generated at the fuel electrode as described below are diffused inside the solid polymer membrane to move to the oxygen electrode side, and water (H₂O) generated by reaction with the oxygen is discharged from the oxygen electrode side.

Fuel electrode (anode electrode): H₂ → 2H⁺ + 2e⁻

Oxygen electrode (cathode electrode): 1/2O₂ + 2H⁺ + 2e⁻ → H₂O

In order to activate the solid polymer fuel cell, it is necessary to supply the anode electrode with the fuel gas containing hydrogen and supply the cathode electrode with the oxidation gas containing oxygen in such a separated manner that these gases can be isolated from each other. This is because there is a risk of lowering the power generation efficiency, if one of the gases is mixed with the other gas due to insufficiency of the isolation. Against such a background, a sealing agent is used in many portions for the purpose of preventing leakage of the fuel gas, the oxygen gas, and the like. Specifically, the sealing agent is used between adjacent separators, between a separator and a frame, between a frame and an electrolyte membrane or MEA, and so on.

As the polymer electrolyte membrane, there is a cation exchange membrane having ion conductivity, and a preferable one is made of a fluorine-based polymer having a sulfonic acid group or the like, because it is chemically stable and has high resistance under high-temperature operation. There are commercially available products such as Nafion (registered trademark) manufactured by DuPont, Flemion (registered trademark) manufactured by AGC (former Asahi Glass Corporation), Aciplex (registered trademark) manufactured by Asahi Kasei Co., Ltd., and the like. Although a polymer electrolyte membrane generally has properties difficult to bond, use of the curable resin composition of the present invention makes it possible to bond the polymer electrolyte membrane.

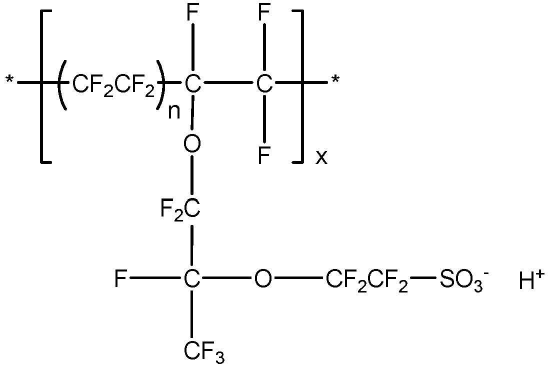

### Nafion (registered trademark)

The fuel electrode is called a hydrogen electrode or an anode, and a known electrode is used as the fuel electrode. For example, an electrode in which carbon carries a catalyst such as platinum, nickel, or ruthenium is used. Meanwhile, the air electrode is called an oxygen electrode or a cathode, and a known electrode is used as the air electrode. For example, an electrode in which carbon carries a catalyst such as platinum or an alloy is used. The surface of each electrode may be provided with a gas diffusion layer which performs to diffuse gas and moisturize the electrolyte membrane. As the gas diffusion layer, a known layer is used, and examples thereof include carbon paper, carbon cloth, carbon fiber, and the like.

As illustrated in Fig. 1, each of the separators 2 is provided with finely-ribbed flow paths, through each of which a fuel gas or an oxidizing gas is supplied to the corresponding electrode. The separator is made of aluminum, stainless steel, titanium, graphite, carbon, or the like.

The frame supports and reinforces an electrolyte membrane or MEA, which is a thin membrane, so as not to break the electrolyte membrane or MEA. As a material for the frame, there are thermoplastic resins such as polyvinyl chloride, polyethylene naphthalate, polyethylene terephthalate, polypropylene, and polycarbonate. When a photo-radical polymerization initiator is used as the ingredient (B), the members are preferably light-transmissive for the purpose of bonding the members together by using the curable resin composition of the present invention or a cured product thereof.

The fuel cell of the present invention is characterized in that sealing is provided by the curable resin composition of the present invention or a cured product thereof. The members needed to be sealed in the fuel cell are the separators, the frame, the electrolyte membrane, the fuel electrode, the air electrode, the MEA, and so on. More specifically, sealing is provided between the adjacent separators, between the separator and the frame, between the frame and the electrolyte membrane or MEA, and the like. Here, the main purpose of "sealing between the separator and the frame" or "between the polymer electrolyte membrane or the MEA and the frame" is to prevent mixing or leakage of the gases, and the sealing between the adjacent separators is provided in order to prevent leakage of the gas and to prevent leakage of the cooling water to the outside from the cooling water flow path. Note that since the atmosphere becomes strongly acidic due to the acid generated from the electrolyte membrane, acid resistance is required for the sealing agent.

### <Sealing Method>

A sealing method using the curable resin composition of the present invention is not particularly limited, and typical methods are FIPG (Form-in-Place Gasket), CIPG (Cure-in-Place Gasket), MIPG (Mold-in-Place Gasket), liquid injection molding, and the like.

FIPG is an adhesive sealing method involving: applying the curable resin composition of the present invention to a flange of a seal target component by an automatic coater or the like; and curing the curable resin composition, with the flange stuck on another flange. More specifically, the method is a method for sealing at least part of at least two flanges of seal target components including the at least two flanges, the method comprising the steps of: applying the curable resin composition described above to a surface of at least one of the flanges; sticking the one flange with the curable resin composition applied thereto onto the other flange with the curable resin composition interposed in between; and sealing the at least part of the at least two flanges by curing the curable resin composition. When a photo-radical polymerization initiator is used as the ingredient (B), it is appropriate that at least one of the flanges allows light of active energy rays to pass therethrough and it is preferable to cure the curable resin composition by irradiation with active energy rays such as ultraviolet rays from the light-transmissive flange side.

CIPG is a method involving: applying the curable resin composition of the present invention in the form of a bead to a flange of a seal target component by an automatic coater or the like; forming a gasket by curing the curable resin composition; and performing compression sealing with the flange stuck on another flange. More specifically, the method is a method for sealing at least part of at least two flanges of seal target components including the at least two flanges, comprising the steps of: applying the curable resin composition described above at least one of the flanges; curing the curable resin composition to form a gasket composed of a cured product of the curable resin composition; placing the other flange on the gasket, and sealing the at least part of the at least two flanges in such a way that the other flange and the one flange with the curable resin composition applied thereto are pressure bonded together with the gasket interposed in between. When a photo-radical polymerization initiator is used as the ingredient (B), it is preferable to cure the applied curable resin composition by irradiating the curable resin composition with active energy rays such as ultraviolet rays.

MIPG is a method involving: placing a mold in pressure contact with a flange of a seal target component in advance; forming a gasket by injecting the curable resin composition into a cavity formed between the mold and the flange and curing the curable resin composition; and performing compression sealing with the flange stuck on the other flange. Here, the mold is preferably made of a light-transmissive material, which is specifically glass, polymethylmethacrylate (PMMA), polycarbonate, cycloolefin polymer, olefin, or the like. In addition, for easy demolding of the gasket from the mold after the formation of the gasket, it is preferable to apply a release agent such as a fluorine-based agent or a silicone-based agent. More specifically, the method is a method for sealing at least part of at least two flanges of seal target components including the at least two flanges, comprising the steps of: placing a gasket formation mold on at least one of the flanges; injecting the curable resin composition described above into at least part of a cavity formed between the gasket formation mold and the flange on which the mold is placed; curing the curable resin composition to form a gasket composed of a cured product of the curable resin composition; detaching the mold from the one flange; and sealing the at least part of the at least two flanges by placing the other flange on the gasket and then pressure bonding the one and the other flanges together with the gasket interposed in between. When a photo-radical polymerization initiator is used as the ingredient (B), preferred curing of the curable resin composition is curing by irradiating the curable resin composition with active energy rays such as ultraviolet rays. In addition, when a photo-radical polymerization initiator is used as the ingredient (B), MIPG preferably involves: placing a mold in pressure contact with a flange of a seal target component in advance; and forming a gasket by injecting the curable resin composition into a cavity formed between the mold made of a light-transmissive material and the flange, and photocuring the curable resin composition by irradiation with active energy rays such as ultraviolet rays.

The liquid injection molding is a method involving: forming a gasket by injecting the curable resin composition of the present invention with a predetermined pressure into a mold, and curing the curable resin composition; and performing compression sealing with the flange stuck on the other flange. Here, the mold is preferably made of a light-transmissive material, which is specifically glass, PMMA, polycarbonate, cycloolefin polymer, olefin, or the like. In addition, for easy demolding of the gasket from the mold after the formation of the gasket, it is preferable to apply a release agent such as a fluorine-based agent, a silicone-based agent, or the like. When a photo-radical polymerization initiator is used as the ingredient (B), the mold is preferably made of a light-transmissive material, and it is preferable to form a gasket by photocuring the injected curable resin composition by irradiation with active energy rays such as ultraviolet rays.

### Examples

Hereinafter, the present invention will be described in further details by taking Examples, but the present invention should not be limited to these Examples.

### <Preparation of Curable Resin Composition>

The ingredients were each measured out in parts by mass shown in Table 1, and were mixed in a planetary mixer for 60 minutes at normal temperature in a light-shielded environment to prepare a curable resin composition. Physical properties were measured as follows. Note that the detailed amounts for the preparation are in accordance with Table 1, and all numerical values of the ingredients are expressed in parts by mass.

### <Production of al>

### Production of Polyisobutylene Having Acryloyloxyethoxyphenyl Groups (a1)

After replacing the inside of a 5 L separable flask with nitrogen, 200 mL of n-hexane and 2000 mL of butyl chloride were added, and the mixture was cooled to -70°C with stirring under a nitrogen atmosphere. Subsequently, 840 mL (9 mol) of isobutylene, 12 g (0.05 mol) of p-dicumyl chloride, and 1.1 g (0.012 mol) of 2-methylpyridine were added. After the reaction mixture was cooled to -70°C, 5.0 mL (0.05 mol) of titanium tetrachloride was added to initiate polymerization. Three hours after the initiation of polymerization, 40 g of phenoxyethyl acrylate (Light Acrylate PO-A, manufactured by Kyoeisha Chemical Co., Ltd.) and 110 ml of titanium tetrachloride were added. After that, stirring was continued at -70°C for 4 hours, and then 1000 ml of methanol was added to stop the reaction. The supernatant was separated from the reaction solution, and the solvent and the like were distilled off. Then, the product was dissolved in 3000 ml of n-hexane, washed three times with 3000 ml of pure water, and reprecipitated from methanol. After that, the solvent was distilled off under reduced pressure, and the obtained polymer was vacuum-dried at 80°C for 24 hours to obtain a polyisobutylene having acryloyloxyethoxyphenyl groups (a1).

The a1 contains the -[CH₂C(CH₃)₂]- unit and contains two acryloyl groups. More specifically, a1 is a polyisobutylene where, in general formula (1), R¹ represents a phenylene group, PIB represents a polyisobutylene skeleton, R⁴ represents a hydrocarbon group having two carbon atoms, R² and R³ each independently represent a hydrogen atom, R⁵ represents a hydrogen atom, and more specifically, is a polymer represented by the following general formula (3). Note that the number average molecular weight of the ingredient a1 (chromatographic method, in terms of polystyrene) was 11,100, and the viscosity (25°C) of the ingredient a1 was 1550 Pa·s.

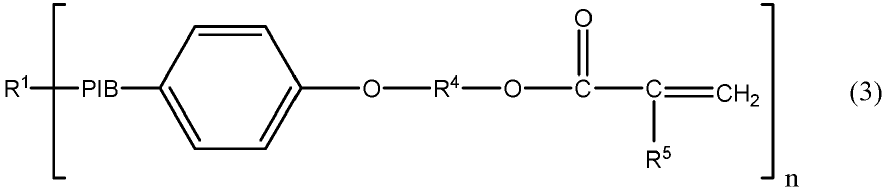

### <Comparative Ingredient for Ingredient (A)>

a'1: polyester-based urethane acrylate (CN984 manufactured by Sartomer)

### <(B) Ingredient>

b1: 2-hydroxy-2-methyl-1-phenyl-propan-1-one (IRGACURE1173 manufactured by BASF)

### <(C) Ingredient>

c1-1: t-butylcyclohexyl methacrylate (TBCHMA manufactured by MCC Unitec Co., Ltd.)

c1-2: t-butylcyclohexyl acrylate (SR-217 manufactured by Sartomer)

c2-1: dicyclopentenyloxyethyl methacrylate (FA-512MS manufactured by Hitachi Chemical Co., Ltd.)

c2-2: dicyclopentenyloxyethyl acrylate (FA-512AS manufactured by Hitachi Chemical Co., Ltd.)

c2-3: dicyclopentenyl acrylate (FA-511AS manufactured by Hitachi Chemical Co., Ltd.)

c2-4: adamantyl methacrylate (MADA manufactured by Osaka Organic Chemical Industry Co., Ltd.)

### <Comparative Ingredient for (C)>

c'1: acrylic morpholine (ACMO manufactured by KJ Chemicals Corporation)

c'2: stearyl acrylate (manufactured by Osaka Organic Chemical Industry Co., Ltd.)

c'3: tetrahydrofurfuryl acrylate (THFA manufactured by Osaka Organic Chemical Industry Co., Ltd.)

c'4: lauryl acrylate (LA manufactured by Osaka Organic Chemical Industry Co., Ltd.)

c'5: phenoxyethyl acrylate (Light acrylate PO-A manufactured by Kyoeisha Chemical Co., Ltd.)

The test methods used in Examples and Comparative Examples in Table 1 are as follows.

### (1) Measurement of Hardness

A sheet-shaped cured product was fabricated by curing each curable resin composition with the thickness set to 1 mm while irradiating it with ultraviolet rays in an accumulated light amount of 45 kJ/m². A pressing surface of a type A durometer (hardness tester) was pressed against a test piece (six sheet-shaped cured products stacked with a thickness set to 6 mm) with a force of 10 N while being kept in parallel to the test piece, thereby bringing the pressing surface and the sample into close contact with each other. The maximum value was read during measurement, and the maximum value is used as "hardness". The details of the measurement were in accordance with JIS K 6253 (2012). Here, the hardness is preferably 25 or more, and more preferably 30 or more.

### (2) Method of Measuring Elongation of Cured Product

A sheet-shaped cured product was fabricated by curing each curable resin composition with the thickness set to 1 mm while irradiating it with ultraviolet rays in an accumulated light amount of 45 kJ/m². The cured product was punched out in a No. 3 dumbbell shape to prepare a test piece, and gauge lines were marked on the test piece at an interval of 20 mm.

The test piece was fixed to the chucks in the same manner as measurement of the tensile strength, and stretched at a tensile speed of 500 mm/min until the test piece was broken. Since the test piece was elongated during the measurement to increase the gauge length, the gauge length was measured by a vernier caliper until the test piece was broken. The "elongation (%)" is defined as a ratio of an elongated length to the initial gauge length. Evaluation was made based on the criteria to be described later and Table 1 shows the results. Here, the elongation is preferably 130% or more and more preferably 200% or more from the viewpoint of high extensibility.

### (3) Measurement of Tensile Strength

A sheet-shaped cured product was fabricated by curing each curable resin composition with the thickness set to 1 mm while irradiating it with ultraviolet rays in an accumulated light amount of 45 kJ/m². The cured product was punched out in a No. 3 dumbbell shape to prepare a test piece. Both ends of the test piece were fixed to the chucks such that the long axis of the test piece and the centers of the chucks are aligned in a line. The test piece was stretched at a tensile speed of 50 mm/min and the maximum load was measured. The strength under the maximum load is defined as "tensile strength (MPa)". The details of the measurement were in accordance with JIS K 6251 (2010). Here, the tensile strength is preferably 1.2 MPa or more, and more preferably 2.0 MPa or more.

**[Table 1]**

| | Ex. 1 | Ex. 2 | Ex. 3 | Ex.4 | Ex. 5 | Ex.6 | Ex. 7 | Ex.8 | Ex.9 | Ex. 10 | Comp. Ex. 1 | Comp. Ex. 2 | Comp. Ex.3 | Comp. Ex.4 | Comp. Ex. 5 | Comp. Ex.6 | Comp. Ex. 7 |
|---|---|---|---|---|---|---|---|---|---|---|---|---|---|---|---|---|---|
| a1 | 100 | 100 | 100 | 100 | 100 | 100 | 100 | 100 | 100 | 100 | 100 | 100 | 100 | 100 | 100 | 100 | |
| a'1 | | | | | | | | | | | | | | | | | 100 |
| b1 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| c1-1 | 16.7 | 50 | 83.3 | | | | | | | | | | | | | | |
| c1-2 | | | | 16.7 | 50 | 83.3 | | | | | | | | | | | 50 |
| c2-1 | | | | | | | 50 | | | | | | | | | | |
| c2-2 | | | | | | | | 50 | | | | | | | | | |
| c2-3 | | | | | | | | | 50 | | | | | | | | |
| c2-4 | | | | | | | | | | 50 | | | | | | | |
| c'1 | | | | | | | | | | | | 50 | | | | | |
| c'2 | | | | | | | | | | | | | 16.7 | | | | |
| c'3 | | | | | | | | | | | | | | 16.7 | | | |
| c'4 | | | | | | | | | | | | | | | 16.7 | | |
| c'5 | | | | | | | | | | | | | | | | 17 | |
| Hardness | 33 | 86 | 95 | 30 | 42 | 72 | 47 | 41 | 72 | 90 | 17 | 47 | 31 | 30 | 11 | 18 | 85 |
| Elongation (%) | 325 | 405 | 385 | 255 | 345 | 395 | 210 | 165 | 140 | 387 | 250 | 120 | 110 | 220 | 150 | 260 | 95 |
| Tensile Strength (MPa) | 2.0 | 7.8 | 11.9 | 1.2 | 3.4 | 7.0 | 4.4 | 2.5 | 5.7 | 11.4 | 0.9 | 2.0 | 1.1 | 1.1 | 0.4 | 1.1 | 4.2 |
| Viscosity (Pa·s) | | 26 | | | 45 | | 50 | 18 | 48 | | | 40 | | | | | |

Examples 1 to 10 in Table 1 demonstrate that the present invention can provide curable resin compositions from which cured products achieving high tensile strength and high extensibility (elongation) and having sufficient hardness can be obtained.

In addition, it is found that Comparative Example 1 in Table 1, which is a composition not containing the ingredient (C) of the present invention, is poor in hardness and tensile strength. It is found that Comparative Examples 2 to 6, which are compositions using the reactive diluents instead of the ingredient (C) of the present invention, are poor in any of hardness, tensile strength, and extensibility.

### (4) Viscosity Measurement Method

The viscosity (Pa·s) of each of the curable resin compositions of Examples 2, 5, 7, 8, and 9 was measured using a cone-plate viscometer (manufactured by Brookfield) under the following measurement conditions. The measured values of the viscosity are shown in Table 1. Since Example 2 demonstrated 26 Pa·s, Example 5 demonstrated 45 Pa·s, Example 7 demonstrated 50 Pa·s, Example 8 demonstrated 18 Pa·s, and Example 9 demonstrated 48 Pa s, it was confirmed that the curable resin compositions have viscosity low enough to be applied by a screen-printing machine or the like. In the present invention, the viscosity is preferably 200 Pa·s or less, and particularly preferably 100 Pa s or less.

### Measurement Conditions

Cone type CPE-52, rotation speed 5.0 rpm, shear rate 10 (1/s), and temperature 25°C

### (5) Moisture Permeability (Water Vapor Barrier Property)

Each of the curable resin compositions of Examples 2, 4, and 7 and Comparative Example 7 was poured into a frame of 200 mm × 200 mm × 1.0 mm. Then, a sheet-shaped cured product having a thickness of 1.0 mm was prepared by irradiation with ultraviolet rays for 20 seconds using an ultraviolet ray irradiator to obtain an accumulated light amount of 45 kJ/m². In an aluminum cup having an opening with a diameter of 30 mm, 5 g of calcium chloride (anhydrous) was placed, and the cured product was set in the cup. After measuring the "initial total mass" (g), the cured product was allowed to stand for 24 hours in a thermo-hygrostat kept at an ambient temperature of 40°C and a relative humidity of 95%. Thereafter, the "total mass after standing" (g) was measured, and the moisture permeability (g/m²·24 h) was calculated. Evaluation was carried out based on the following evaluation criteria. The results are shown in Table 2. The detailed test method is in accordance with JIS Z 0208. Note that the moisture permeability is preferably less than 50 g/m²·24 h in the case of use as a curable sealing agent for a fuel cell.

### [Evaluation Criteria]

Favorable: The moisture permeability is less than 10 g/m²·24 h
good: The moisture permeability is 10 g/m²·24 h or more and less than 50 g/m²·24 h
Unfavorable: The moisture permeability is 50 g/m²·24 h or more

### (6) Hydrogen Gas Barrier Property

Each of the curable resin compositions of Examples 2, 4, and 7 and Comparative Example 7 was used to prepare a sheet-shaped cured product having a thickness of 1.0 mm by irradiation with ultraviolet rays for 20 seconds using an ultraviolet ray irradiator to obtain an accumulated light amount of 45 kJ/m². Next, the sheet-shaped cured product was used in accordance with JIS K 7126-1: 2006 (Plastic-Film and Sheet-Gas Permeability Test Method - Part 1: Differential Pressure Method). Note that the test type was the pressure sensor method, and the measurement was conducted under the conditions of 23°C and the high pressure side test gas (hydrogen gas) having 100 kPa. Evaluation was carried out based on the following evaluation criteria. The results are shown in Table 2. Note that the hydrogen gas barrier property is preferably less than 1 × 10⁻¹⁵ mol·m/m²·s·Pa in the case of use as a photo-curable sealing agent for a fuel cell.

### [Evaluation Criteria]

Favorable: less than 1 × 10⁻¹⁵ mol·m/m²·s·Pa
Unfavorable: 1 × 10⁻¹⁵ mol·m/m²·s·Pa or more

**[Table 2]**

| | Example 2 | Example 4 | Example 7 | Comparative Example 7 |
|---|---|---|---|---|
| Moisture Permeability | Favorable | Favorable | Favorable | Unfavorable |
| Hydrogen Gas Barrier Property | Favorable | Favorable | Favorable | Unfavorable |

Examples 2, 4, and 7 in Table 2 demonstrate that the present invention is low in moisture permeability and excellent in hydrogen gas barrier property, and has good sealability. On the other hand, Comparative Example 7, which uses the polyester-based urethane acrylate instead of the ingredient (A), results in poor hydrogen gas barrier property.

### Industrial Applicability

The present invention is a curable resin composition from which a cured product achieving high tensile strength and high extensibility can be obtained, and therefore is usable in various sealing applications. In particular, the curable resin composition is effective as curable sealing agents for fuel cells and therefore is useful industrially.

### Reference Signs List

- 1: cell of solid polymer fuel cell
- 2: separator
- 3a: air electrode (cathode)
- 3b: fuel electrode (anode)
- 4: polymer electrolyte membrane
- 5: electrolyte membrane electrode assembly (MEA)
- 6: frame
- 7: adhesive or sealing agent
- 8a: oxidizing gas flow path
- 8b: fuel gas flow path
- 9: cooling water flow path
- 10: cell stack
- 11: solid polymer fuel cell

## Claims

1. A curable resin composition comprising the following ingredients (A) to (C):
ingredient (A): a polymer which has one or more (meth)acryloyl groups and has a polyisobutylene skeleton containing a -[CH₂C(CH₃)₂]- unit;
ingredient (B): a radical polymerization initiator; and
ingredient (C): a monomer (c1) which has an alicyclic structure containing a (meth)acryloyl group and a substituent of a hydrocarbon group having 2 to 20 carbon atoms or a monomer (c2) which has a (meth)acryloyl group and a dicyclopentenyl group or adamantyl group.

2. The curable resin composition according to claim 1, wherein the ingredient (c1) is (meth)acrylate having a t-butyl cyclohexyl group.

3. The curable resin composition according to claim 1 or 2, wherein the ingredient (C) is one or more compounds selected from the group consisting of t-butylcyclohexyl (meth)acrylate, t-butylcyclohexyloxyethyl (meth)acrylate, dicyclopentenyl (meth)acrylate, dicyclopentenyloxyethyl (meth)acrylate, 1-adamantyl (meth)acrylate, 2-methyl-2-adamantyl (meth)acrylate, and 2-ethyl-2-adamantyl (meth)acrylate.

4. The curable resin composition according to any one of claims 1 to 3, wherein the ingredient (A) is a polymer having a polyisobutylene skeleton represented by general formula (1): 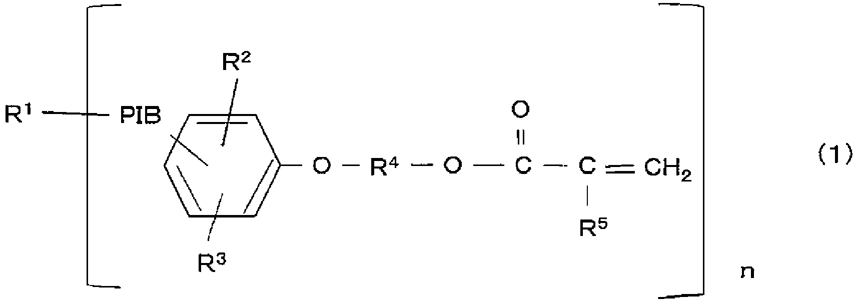 where R¹ represents a monovalent or polyvalent aromatic hydrocarbon group, or a monovalent or polyvalent aliphatic hydrocarbon group, PIB represents the polyisobutylene skeleton containing the -[CH₂C(CH₃)₂]- unit, R⁴ represents a divalent hydrocarbon group having 2 to 6 carbon atoms and optionally containing an oxygen atom, R² and R³ each independently represent a hydrogen atom or a monovalent hydrocarbon group having 1 to 20 carbon atoms, R⁵ represents a hydrogen atom, a methyl group, or an ethyl group, and n is an integer from 1 to 6.

5. The curable resin composition according to any one of claims 1 to 4, wherein
the ingredient (C) is contained at 3 to 300 parts by mass relative to 100 parts by mass of the ingredient (A).

6. A curable sealing agent for a fuel cell, comprising the curable resin composition according to any one of claims 1 to 5.

7. The curable sealing agent for a fuel cell according to claim 6, wherein
the curable sealing agent for a fuel cell is a sealing agent for a periphery of any member selected from the group consisting of separators, frames, electrolytes, fuel electrodes, air electrodes, and electrolyte membrane electrode assemblies, which are members in a fuel cell.

8. The curable sealing agent for a fuel cell according to claim 6, wherein
the curable sealing agent is a sealing agent between adjacent separators in a fuel cell or a sealing agent between a frame and an electrolyte membrane or an electrolyte membrane electrode assembly in the fuel cell.

9. The curable sealing agent for a fuel cell according to any one of claims 6 to 8, wherein
the curable sealing agent is a sealing agent for a solid polymer fuel cell.

10. A cured product which is formed by curing the curable resin composition according to any one of claims 1 to 5 or the curable sealing agent according to any one of claims 6 to 9.

11. A fuel cell comprising any seal selected from the group consisting of seals between adjacent separators in the fuel cell and a seal between a frame and an electrolyte membrane or an electrolyte membrane electrode assembly in the fuel cell, wherein
the any seal is the cured product according to claim 10.

12. The fuel cell according to claim 11, wherein
the fuel cell is a solid polymer fuel cell.

13. A method for sealing at least part of at least two flanges of seal target components including the at least two flanges, comprising the steps of:
applying the curable resin composition according to any one of claims 1 to 5 to a surface of at least one of the flanges;
sticking the one flange with the curable resin composition applied thereto onto the other flange with the curable resin composition interposed in between; and
sealing the at least part of the at least two flanges by curing the curable resin composition.

14. A method for sealing at least part of at least two flanges of seal target components including the at least two flanges, comprising the steps of:
applying the curable resin composition according to any one of claims 1 to 5 to at least one of the flanges;
curing the applied curable resin composition to form a gasket composed of a cured product of the curable resin composition; and
placing the other flange on the gasket and sealing the at least part of the at least two flanges by pressure bonding the one flange with the curable resin composition applied thereto and the other flange together with the gasket interposed in between.

15. A method for sealing at least part of at least two flanges of seal target components including the at least two flanges, comprising the steps of:
placing a gasket formation mold on at least one of the flanges;
injecting the curable resin composition according to any one of claims 1 to 5 into at least part of a cavity formed between the gasket formation mold and the flange on which the mold is placed;
curing the curable resin composition to form a gasket composed of a cured product of the curable resin composition;
detaching the mold from the one flange; and
sealing the at least part of the at least two flanges by placing the other flange on the gasket and then pressure bonding the one and the other flanges together with the gasket interposed in between.
